# EUROPEAN PATENT APPLICATION

(11) **EP 2 378 149 A1**
(43) Date of publication of application: **19.10.2011**
(21) Application number: 10159932.2
(22) Date of filing: 14.04.2010
(51) Int. Cl.: F16D 1/10, H02K 7/00

(54) **Mechanical connection system**

(71) Applicant: NICE S.P.A., 31046 Oderzo (Treviso) (IT)
(72) Inventor: Malausa, Andrea, 31046, Oderzo (Treviso) (IT); Galberti, Lorenzo, 31046, Oderzo (Treviso) (IT)
(74) Representative: Citron, Massimiliano

(57) **Abstract**

A mechanical connection system between an electric motor (30) of a tubular gear motor for shutters or the like and a mechanical reducer (12) capable of reducing the number of revs coming from the motor to an operating speed suitable for moving the shutter is described, comprising an outlet member (40) of the motor which can rotate around a rotation axis (X), and a toothed pinion (20) which can be connected to the outlet member so as to receive rotary motion from it and transfer it to the reducer. In order to simplify the assembly, guiding and/or alignment means (26, 52, 58) are foreseen to guide and/or align the outlet member and/or the pinion, independently from their initial relative angular position, towards a position of reciprocal rotational locking.

## Description

The invention refers to a mechanical connection system between the electric motor and the mechanical reducer which form a tubular gear motor for setting in motion shutters in general, like adjustable shutters, internal or external awnings, rolling gates, Venetian blinds, mosquito nets, shutters or rolling shutters for the garage, or the like.

Shutters or the like are often actuated by particular tubular actuation systems equipped with an electric motor and a mechanical reducer. The reducer is necessary for reducing the number of revs coming out from the motor to an operating speed suitable for moving the shutter.

Known gear motors have an electric motor with an output pin onto which a toothed pinion is coaxially connected so as to transfer the rotary motion generated by the motor to the reducer. During assembly the toothed pinion must be connected to the motor and to the reducer in the correct manner: the base of the pinion is forcedly pushed on the output pin of the electric motor whereas its head is inserted inside the mechanical reducer so as to engage it with the respective gears.

The shape of the output pin of the electric motor and of the base of the toothed pinion is such as to make them couple in a complementary manner to avoid rotational sliding and to efficiently transmit the rotary motion. In practice it is a locked shape-coupling that allows the pinion to be in only two stable positions, one every 180° rotation.

During the manual assembly of the actuation system the assembling worker must take a toothed pinion and fit the base thereof onto the output pin of the electric motor in the correct angular position. Since there are only two possible positions at 180° from one another it is inevitable that the worker must make many different attempts, rotating the pinion on the pin until the two couple correctly. Of course, this operation causes a slowing down of the productive cycle, with a consequent cost increase. In order to make it automated one would have to use a machine which analyses and recognises the shape of objects, so as to allow it to align and make the base of the toothed pinion and the output pin of the electric motor coincide with the correct relative axial rotation. The cost of the machine would be considerable, and would affect the final cost too much.

The main object of the invention is to make the assembly of the toothed pinion on the output pin of the electric motor simpler and more efficient.

Another object of the invention is to obtain a reduction of the assembly time.

Such objects are obtained with a mechanical connection system between an electric motor of a tubular gear motor for shutters or the like and a mechanical reducer capable of reducing the number of revs coming out from the motor at a regime suitable for moving the shutter, comprising
an output member of the motor which is rotatable around a rotation axis, and
a toothed pinion which is connectable to the outpin member so as to receive rotary motion therefrom and transfer it to the reducer,
characterised in that it comprises guiding and/or alignment means to guide and/or align the output member and/or the pinion independently of their initial relative angular position towards a position of reciprocal rotational locking.

With the invention the toothed pinion can thus be easily directed towards the locking position on the motor shaft.

Preferably, the guiding and/or alignment means are adapted for guiding and/or aligning the output member and/or the pinion thanks to a rotation, preferably around the rotation axis of the output member. This makes the assembly very natural for a worker, and allows the alignment and the guiding on the output member independently of the initial angular position of the toothed pinion, avoiding the adjustment of the worker which lengthens the assembly time.

A preferred embodiment of the guiding and/or alignment means comprises one or more inclined surfaces on the output member and/or the toothed pinion which are contained in or are tangent to a helix segment which winds around said axis, so as to induce a relative rotation, around said axis, between the output member and the toothed pinion during a coaxial approach thereof to one another (carried out by the worker during assembly) which aligns and/or guides them towards said locking position.

The advantage is the simplicity in which said characterising means are manufactured, which can be obtained for example through moulding with the simple definition of a suitable shape, without additional parts.

The one or more surfaces can be the initial part of grooves, or cavities or ribs with an extension parallel to said rotation axis, which are obtained on the output member and/or on the toothed pinion. The main advantage is that with the grooves it is possible to reciprocally align and guide the toothed pin and the output shaft; i.e. the alignment means and the guiding means are integrated together.

Other preferred embodiments are defined in the dependent claims.

Further characteristics and advantages of the invention shall become clearer from the example description of a coupling system, together with the attached drawings, in which:
figure 1 shows a three dimensional exploded view of an electric motor, a mechanical reducer and the relative connection means;
figure 2 shows another three dimensional exploded view of the components of fig. 1 from a different angle;
figure 3 shows a side view of a component of the motor;
figure 4 shows a top view of the component of fig. 3;
figure 5 shows a bottom view of a toothed pinion;
figure 6 shows a side view of the pinion of fig. 5;
figure 7 shows a top view of the pinion of fig. 5;
figure 8 shows a side view of a variant of the component of fig. 3;
figure 9 shows a three dimensional view of the component of fig. 8.

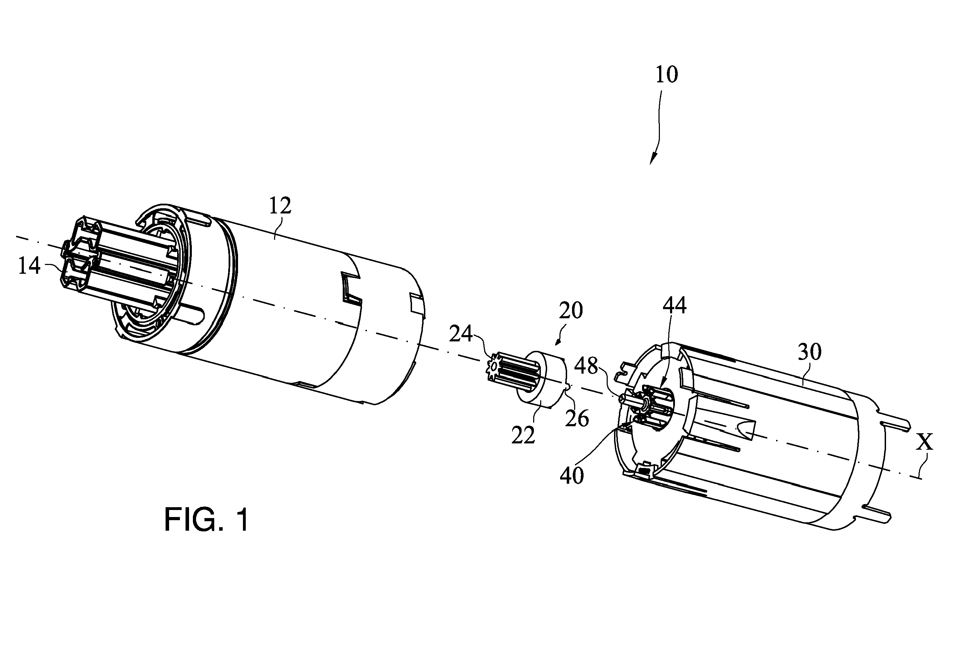

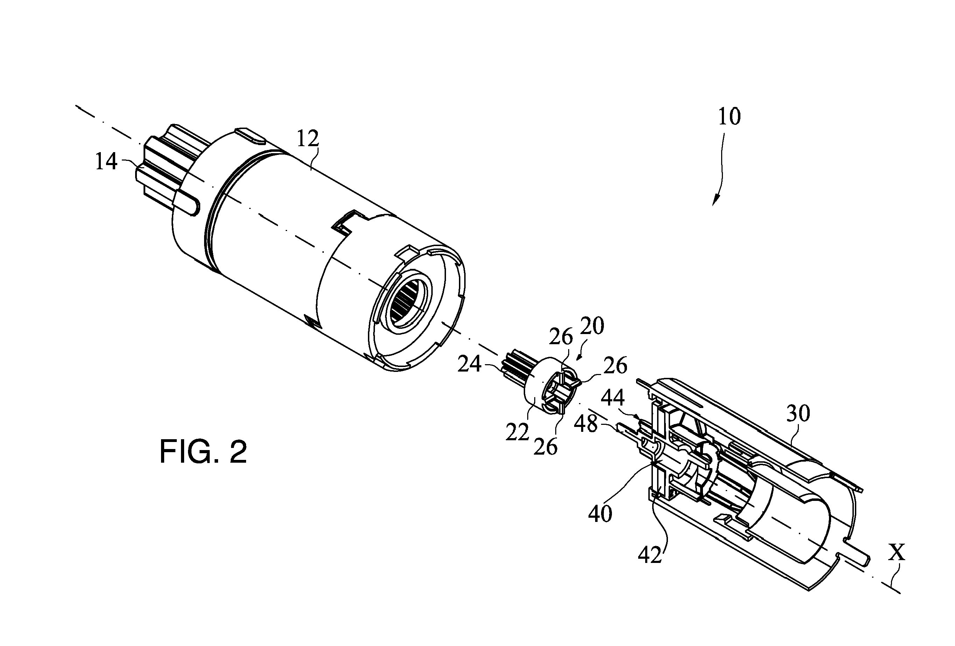

In figures 1 and 2 a system 10 is shown for coupling and connecting an electric motor 30 to a mechanical reducer 12 along a longitudinal axis X.

The electric motor 30 has an output member 40 rotating around the axis X and on which a toothed pinion 20 is couplable. Through the pinion 20 the rotary motion is transferred inside the reducer 12, and from the latter transmitted to the shutter (not shown) by means of the output shaft 14 of the mechanical reducer 12.

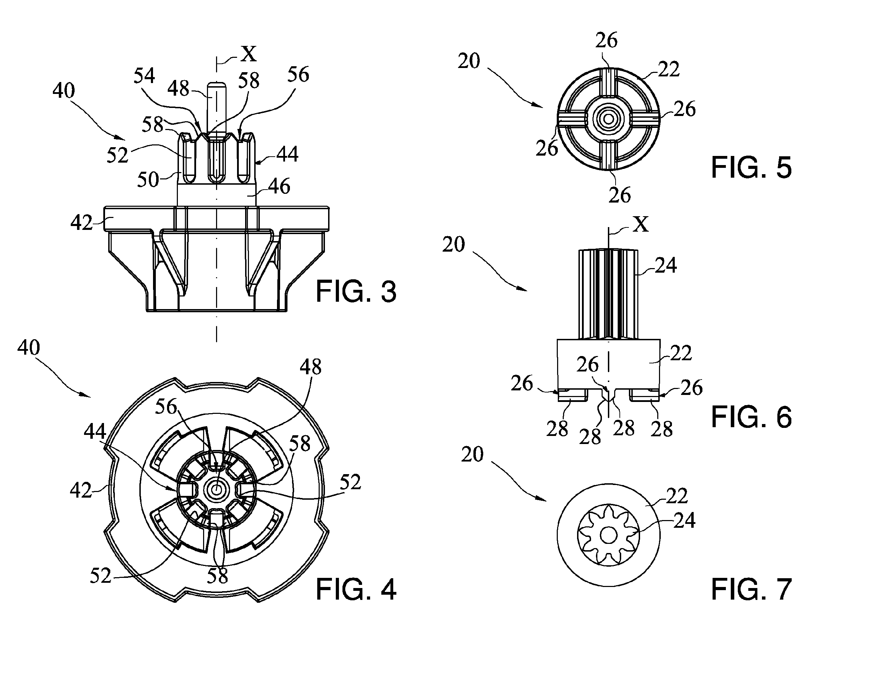

With reference to figures 3 and 4, the member 40 is formed by a widened base 42, similar to a disc or plate, from which a pin head 44 with smaller dimensions extends along the axis X. The pin head 44 has a smaller radius than that of the base 42, which can be used, for example, to assemble a lining pad, as explained in WO 2007085570, so as to make a brake for the motor 30.

The head 44 comprises a substantially cylindrical body 46 from the centre of the upper base 56 of which a cylindrical peg 48 axially projects with a smaller diameter.

The cylindrical body 46, along its perimeter, has a circular series of grooves 52, in the example eight, which are angularly equally spaced apart around the axis X. The grooves 52 extend parallel to the axis X from the base of the body 46 to the free upper base 56. Therefore, by construction the grooves 52 are open both towards the base 56 as well as radially outwards, and are thus separated from one another, and angularly spaced, by non-recessed sections 50 which are substantially parallel to the axis X.

The upper ends of the sections 50 have a pointed shape 54 formed symmetrically by two inclined planes 58 which extend beyond the plane on which the upper base 56 lies. Alternatively, the ends of the sections 50 can also be rounded.

Therefore at the mouth of a groove 52 there are always two inclined planes 54, one for each side wall, which converging towards a groove 52 form a sort of inducement or sliding and insertion guide, the use of which shall soon be explained.

The toothed pinion 20 comprises a base bushing 22 and a toothed portion 24 which is coaxial to it. The bushing 22 is hollow on the side opposite to the toothed portion 24 and in the cavity it has four teeth 26 arranged in cross-layout(one every 90°) and spaced from the centre of the bushing 22. The minimum distance between the inner ends of the diametrically opposite teeth 26 is greater than the distance between the bottom of two diametrically opposite grooves 52. The teeth 26 project from the body of the bushing in a direction of the axis X (downwards in fig. 6) and can be shaped with a pointed shape, for example made up of two inclined planes 28 like in fig. 6, or rounded.

During assembly, the worker takes the toothed pinion 20 and places it over the head 44. The peg 48 is fitted between the teeth 26, until they touch the upper base 56. At this point the planes 28 of the teeth 26 hit the sections 50 at the inclined planes 58, which gently direct the teeth 26 inside the grooves 52, by making the pinion 20 rotate around the axis X. All the worker is left to do is to push the pinion 20 further on the head 44, to make the teeth 26 slide completely into the grooves 52.

After the complete assembly, i.e. after the insertion of the pinion 20 into the reducer 12 as well, the interaction of the grooves 52 with the teeth 26, and of the toothed portion 24 with the inner gears of the reducer 12, allows the transmission of the rotary motion from the member 40 to the output shaft 14 of the reducer 12.

It should be noted that the inclined planes 58 extend beyond the plane in which the upper base lies 56, with the advantage of guiding the pinion 20 more effectively and promptly, since the respective teeth 26 are better intercepted.

The circular arrangement of the grooves 52 allows the worker to not have to rotate the pinion 20 on the member 40, with consequent time saving and certainty of result. The inclined planes in the sections 50 and/or on the teeth 26 are self-centring means which advantageously always ensure the fast and automatic alignment of the parts to be coupled. The worker does not have to look, since the reciprocal configuration of the pinion 20 and member 40 integrates a guiding system for the pinion 20. There is consequently a faster assembly speed and errors during assembly are decreased.

Instead of the two inclined planes 58, 28, for example only onecould be made, extending for the entire width of the section 50 and/or of the teeth 26. Even if the best result is obtained when the reciprocal inclination of the inclined planes on the member 40 and the pinion 20 is such as to make them superpose once they are in contact, the guiding and leading effect remains even if only one side of a plane slides on the surface of the other one. Indeed, the technical guiding and/or alignment effect is obtained even if only one, from the member 40 and the pinion 20, has the inclined planes. It is sufficient for the other one to have a surface adapted for sliding over it.

The invention is prone to many variants. For example the position of the grooves and reliefs to be guided in them can also be exchanged between member 40 and pinion 20; or the number and the spatial arrangement of the grooves 52 and/or the tabs or teeth 26 can vary from what has been illustrated. Even if a symmetrical arrangement improves the distribution of the stresses, for example a single tab or tooth 26 could be sufficient.

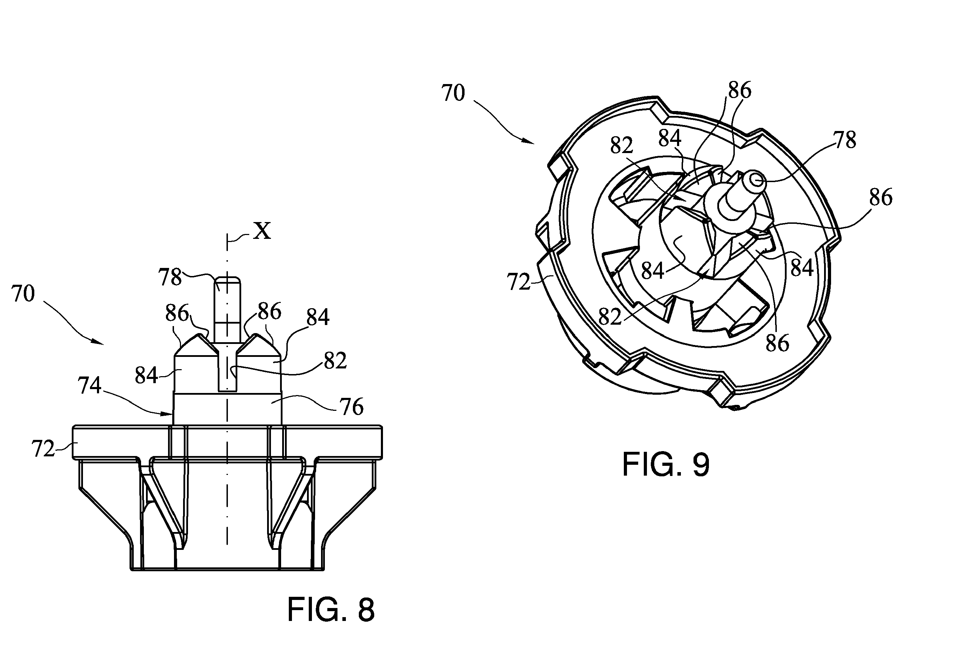

Figures 8 and 9 show a variant example 70 for the output member of the electric motor, still rotating around the axis X and on which the previously described toothed pinion 20 can be coupled.

The member 70 differs from the member 40 only for the shape of the coupling interface with the pinion 20, therefore only this shall be described.

From a widened base 72 a pin head 74 with a shorter radius extends along the axis X. The head 74 comprises a substantially cylindrical body 76 from the centre of which a cylindrical peg 78 with a shorter diameter axially projects.

The cylindrical body 76 has four cavities or recesses 82 on the side which are arranged angularly at 90° around the axis X, in a cross arrangement. The recesses 82 extend parallel to the axis X along the initial part of the body 76 opposite the base 72. The recesses 82 on the body 76 separate four portions 84 flush with the base of the body 76, also arranged at 90°. The portions 84 end with two inclined planes 86 which define a pointed shape or structure.

The toothed pinion 20 can be inserted on the member 70 in the same way and with the same results as described for the member 40. In substance, during assembly the inclined planes 86 intercept the teeth 26 and guide them inside the recesses 82, making the pinion 20 rotate around the axis X in case of imperfect reciprocal alignment.

Therefore, it should be understood that the invention achieves the predetermined objects. The assembly of the toothed pinion on the output pin of the electric motor is simpler, because it does not need a manual alignment, and more efficient, because it can occur over a shorter time and without errors. Consequently assembly time and production costs are reduced.

## Claims

1. Mechanical connection system between an electric motor (30) of a tubular gear motor for shutters or the like and a mechanical reducer (12) capable of reducing the number of revs coming out from the motor to an operating speed suitable for moving the shutter, comprising
an output member (40) of the motor which is rotatable around a rotation axis (X),
a toothed pinion (20) which is connectable to the output member so as to receive rotary motion therefrom and transfer it to the reducer,
**characterised in that**
it comprises guiding and/or alignment means (26, 52, 58) to guide and/or align the output member and/or the pinion independently of their initial relative angular position towards a position of reciprocal rotational locking.

2. System according to claim 1, wherein the guiding and/or alignment means are adapted for guiding and/or aligning the output member and/or the pinion through a rotation around said axis.

3. System according to claim 2, wherein said means comprise one or more inclined surfaces (58) on the output member and/or on the toothed pinion which are contained in or tangent to a helix segment which winds around said axis, so as to induce a relative rotation, around said axis, between the output member and the toothed pinion during a coaxial approach thereof to one another which aligns and/or guides them towards said locking position.

4. System according to claim 3, wherein said one or more surfaces are the initial part of grooves (52), or cavities or ribs with an extension which is parallel to said axis, which are obtained on the output member and/or on the toothed pinion.

5. System according to claim 4, wherein the output member comprises a substantially cylindrical portion (44) on which there are said grooves (52) or ribs, and the toothed pinion comprises a seat for receiving the cylindrical portion and teeth (26) adapted for being inserted into the grooves or ribs so as to obtain said reciprocal locking position.

6. System according to claim 5, wherein said one or more surfaces are made up of inclined planes (58) obtained at the ends of the side walls of said grooves (52), the inclined planes being oriented so as to diverge with respect to the side walls and thus widen the section/width of the grooves.

7. System according to claim 6, wherein said grooves or ribs on the cylindrical portion have polar symmetry with respect to said axis, and said inclined planes, belonging two by two to different grooves or ribs, form a cusp.

8. System according to one of claims 4 to 7, wherein the pinion comprises a hollow base (22) which defines said seat, some tabs or teeth (26) extending from the inner walls of said base, the tabs or teeth (26) having dimensions substantially complementary to the grooves (52) or cavities so as to be fitted therein.

9. System according to claim 8, wherein the tabs or teeth comprise inclined planes (28) adapted for making the end of the tab pointed in the direction of said axis.

10. System according to claim 8 or 9, wherein the number of grooves (52) is greater or equal to the number of said teeth or tabs (26).

11. System according to one of claims from 3 to 10, wherein said one or more inclined surfaces are formed with round or partially spherical shapes.
